# EUROPÄISCHE PATENTSCHRIFT

(11) **EP 0 821 016 B1**
(45) Veröffentlichungstag und Bekanntmachung des Hinweises auf die Patenterteilung: **22.09.2004**
(21) Anmeldenummer: 97111307.1
(22) Anmeldetag: 04.07.1997
(51) Int. Cl.: C08F 212/08, C08F 220/12, C04B 24/26

(54) **Verfahren zur Herstellung von sterisch stabilisierten, emulgatorfreien, wässrigen Polymer-Dispersionen und daraus herstellten Pulvern zum Einsatz in Baustoffen**
Process for preparing sterically stabilized, aqueous polymer dispersions, emulgator free aqueous polymer dispersions, and powder for use in building materials prepared therefrom
Procédé de préparation de dispersions aqueuses sans émulsifiant de polymères stabilisés de manière stérique, dispersions aqueuses de polymères et poudres pour l'usage dans les matériaux de construction ainsi préparés

(30) Priorität: 25.07.1996 DE 19629948
(43) Veröffentlichungstag der Anmeldung: 28.01.1998
(73) Patentinhaber: Polymer Latex GmbH & Co. KG, 45764 Marl (DE)
(72) Erfinder: Bordeianu, Radu, Dr., 45772 Marl (DE); Dören, Klaus, Dr., 45772 Marl (DE); Hesterwerth, Dieter, Dr., 48734 Reken (DE)
(74) Vertreter: Lüdcke, Joachim Moritz

(56) Entgegenhaltungen:
- EP-A- 0 538 571
- EP-A- 0 671 435

## Beschreibung

Die vorliegende Erfindung betrifft die Herstellung und Anwendung sterisch stabilisierter, emulgatorfreien, wäßrigen Polymer-Dispersionen und daraus hergestellten Pulvern für Einsatz in Baustoffen.

Es ist schon längst bekannt, daß der Zusatz von Polymer-Dispersionen zu Baustoffmassen mit anorganischen Bindemitteln, wie z. B. Zement, Kalk oder Gips, eine vielseitige Verbesserung dieser Systeme bewirkt. Die Verarbeitbarkeit und die mechanischen Eigenschaften, wie z. B. Biegezugfestigkeit, Bruchfestigkeit, Elastizitätsmodul, Schlagzähigkeit oder Haftung, werden durch Zugabe von Polymer-Dispersionen positiv beeinflußt. Die ursprünglich für diesen Zweck eingesetzten Polyvinylacetat-Dispersionen wurden durch Copolymerisate des Vinylacetates mit Ethylen, Vinylchlorid oder ungesättigten Estern, bzw. durch Styrol/Acrylat- oder Reinacrylat-Dispersionen weitgehend abgelöst Dispersionen auf Styrol/Butadien-, Polychloropren-Basis sind ebenfalls bekannt.

Das Eigenschaftsbild polymermodifizierter Baustoffmassen wird in entscheidendem Maße von der Fähigkeit der eingesetzten Dispersion Polymerfilme zu bilden, bestimmt. Bei filmbildenden Dispersionen entsteht im Mörtel im Laufe der Zementhydratation eine an die anorganische Matrix des Mörtels stark gekoppelte, zusammenhängende Polymermatrix, die innerhalb des Gefüges eine wichtige Funktion bei der Abtragung mechanischer Beanspruchungen übernimmt (K.P. Großkurth und A Konietzko, Kunststoffe 79, 426 (1989)). Ein kohärenter Polymerfilm kann dann entstehen, wenn die Glasübergangstemperatur (T_{g}) des Polymers niedriger als die Temperatur am Ende der Zementhydratationsphase liegt. Dispersionen nichtfilmbildender Polymerer von hoher Glasubergangstemperatur behalten auch im festen Mörtel ihre Teilchenstruktur und dienen lediglich als passiver Fullstoff

Die Stabilität der für den Einsatz in Mörtel bestimmten Polymer-Dispersionen spielt eine zentrale Rolle. Ohne eine derartige Stabilität ist die Verarbeitbarkeit des mit einer solchen Dispersion hergestellten Mörtels nicht befriedigend, da er zum schnellen Eindicken neigt Ferner müssen die Dispersionen eine extrem hohe mechanische Stabilität aufweisen, um der sehr intensiven Scherbeanspruchung bei der Mörtelaufarbeitung Stand zu halten. Diese Anforderungen werden durch eine sterische Stabilisierung der Dispersionen prinzipiell erfüllt. Als Stabilisatoren haben sich nicht-ionische Emulgatoren (ethoxylierte Ester der langkettigen Monocarbonsäuren, ethoxylierte Alkylphenole, etc.) oder Schutzkolloide (z. B. Polyvinylalkohol, Polyethylenglygol, modifizierte Stärkeprodukte, oder nichtionogene Celluloseether) bewährt.

Verfahren zur Herstellung von schutzkolloidstabilisierten (sterisch stabilisierten), emulgatorfreien, wäßrigen Polymer-Dispersionen über radikalische Emulsionspolymerisation sind schon längst bekannt. So wird z. B. in US-PS 4 670 505 die Herstellung von Vinylacetat/(Meth)acrylat-Dispersionen unter Verwendung von Polyvinylalkohol oder Hydroxyethylcellulose als Schutzkolloid, beschrieben. Die bei solchen Verfahren bei < 50 % Vinylacetat im Copolymer allgemein auftretenden sehr hohe Viskositäten werden durch Zugabe eines stabilisierenden Hilfsmittels wie Allylalkohol, Propanol oder Ethylenglykol (GB-PS 1 278 813) oder eines mit Wasser mischbaren, organischen Lösemittels wie Methanol oder Ethanol (EP-PS 0 013 478) bekämpft. Auch über der Einsatz von wasserlöslichen Radikalüberträger wie z. B. Aminoalkoholverbindungen (US-PS 4 670 505) läßt sich die Pfropfung der Monomeren auf das Schutzkolloid und somit die Dispersionsviskosität bequem steuern. Ein Verfahren zur Herstellung von sterisch stabilisierten, wäßrigen Kunststoffdispersionen auf Basis von > 50 Massen-% Styrol und/oder (C₁- bis C₈-Alkyl)(meth)acrylat (EP-A 0 538 571) ermöglicht die Einstellung der Hydrophylie, der Viskosität und des Restmonomergehalts der Dispersionen über eine Polymerisation in Monomerzulauffahrweise, wobei die gesamte Polyvinylalkoholmenge in die Vorlage gegeben wird Die nach diesem Verfahren hergestellten Dispersionen weisen eine unbefriedigende Mörtelstabilität auf.

Aus wirtschaftlichen und praktischen Gründen ist es wünschenswert, die Polymer-Dispersion als in Wasser redispergierbares Pulver herzustellen. Der Transport und die Lagerung des überall vor Ort verfügbaren Anmachwassers wird somit vermieden. Eine sehr zweckmäßige Methode zur Herstellung von Polymer-Pulvern ist die Sprühtrocknung, wobei die Polymer-Dispersion in einem warmen Luft- oder Inertgasstrom versprüht und getrocknet wird. Bei der Herstellung redispergierbarer Pulvern über dieses Verfahren ist der Einsatz thermodynamisch stabiler, schutzkolloidstabilisierter, emulgatorfreien wärßigen Dispersionen von besonderem Vorteil Insbesondere bei der Sprühtrocknung von weichen Polymer-Dispersionen mit T_{g} < 50 °C ist der zusätzliche Einsatz von wasserlöslichen Sprühhilfsmitteln, die das Zusammenklumpen der Polymerteilchen verhindern und eine gute Redispergierbarkeit des entstandenen Pulvers gewährleisten, notwendig Als Schutzkolloide haben sich Polyvinylalkohol (EP-A 0 228 657, DE-A 20 49 114, DE-A 22 14 410), Copolymere auf Basis von Vinylpyrrolidon/Vinylacetat (DE-OS 31 43 071), Naphthalinsulfonsäure/Formaldehyd-Kondensate (EP-A 0 078 449), Phenolsulfonsäure/Formaldehyd-Kondensate (EP-A 0 407 889), oder ähnliche weniger verblockend wirkende, wasserlösliche Polymere, bewährt. Zur Erhöhung der Lagerstabilität, bzw. um ein Verbacken der Pulver zu verhindern, werden, insbesondere bei niedrig-T_{g}-Polymeren, die Produkte meistens mit Antiblockmitteln versetzt. Als Antiblockmittel sind feingemahlene Silikate, Talkum, Dolomit, Diatomeenerde, Kieselgur, kolloidales Silikagel, pyrogen erzeugtes Siliciumdioxid u a. geeignet. Die Menge an Antiblockmittel richtet sich nach der Pulverkorngröße und nach der beabsichtigten Lagerdauer.

Mann kann die unbefriedigende Mörtelstabilität von Polymer-Dispersionen oder -Pulvern durch nachträgliche Zugabe von Substanzen verbessern, die die Aufgabe haben, die Viskosität des Frischmörtels zu erniedrigen und somit die Verarbeitungsfähigkeit des Mörtels zu verbessern Als Betonverflüssigungsmittel werden sulfonierte Phenol-, Melamin-, oder Naphthalinformaldehydkondensate, sulfoniertes Lignin, oder andere sulfonatgruppenhaltige wasserlösliche Polymere eingesetzt. Da solche Produkte bei der Sprühtrocknung gleichzeitig eine Schutzkolloidwirkung aufweisen, ist es üblich, die Betonverflüssiger als Sprühhilfsmittel einzusetzen. Als Sprühhilfsmittel werden z. B in der EP-A 0 078 449 Naphthalinsulfonsäure-Formaldehyd-Kondensate empfohlen. Die EP-A 0 407 889 empfiehlt zu diesem Zweck Phenolsulfonsäure-Formaldehyd-Kondensate Aus der DE-A 20 49 114 ist der Einsatz von sulfonatgruppenhaltigen Kondensationsprodukten aus Melamin und Formaldehyd als Spruhhilfsmittel bekannt. Eine Kombination aus Polyvinylalkohol/vollverseiftes Copolymer aus Isopropenylacetat und Vinylacetat/Melment L 10 (ein sulfoniertes Melamin-Formaldehyd-Kondensat der Fa. SKW Trostberg) wird in der EP-A 0 477 900 beschrieben. Die oben beschriebenen Produkte haben den Nachteil, daß sie gefärbt sind, oder sich im Mörtel, in Gegenwart von Schwermetallionen, färben. Ferner zeigen sulfonatgruppenhaltige wasserlösliche Polymere einen nicht vernachlässigbaren, härtungsverzögernden Effekt,vorzugweise 2 bis 10 Gew.-%.

Die Aufgabe der Erfindung besteht darin, ein Verfahren zur Herstellung vonemulgatorfreien, wäßrigen, sterisch stabilisierten, mörtelstabilen Polymer-Dispersionen und -Pulvern zu entwickeln, welches die Nachteile des geschildertes Standes der Technik uberwindet. Insbesondere soll das Verfahren ermöglichen, solche Dispersionen herzustellen, die als wäßrige Dispersion oder als redispergierbares Pulver, ohne Zusatz von Hilfsmitteln eine sehr gute Mörtelstabilität aufweisen, ohne die Vorteile die der Einsatz von Polymer-Dispersionen in hydraulisch abbindende Massen erbringen zu verlieren.

Diese Aufgabe konnte überraschenderweise wie in den Patentansprüchen angegeben gelöst werden

Der Gegenstand der Erfindung ist somit ein Verfahren zur Herstellung von sterisch stabilisierten, emulgatorfreien, wäßrigen Polymer-Dispersionen und -Pulvern mit erhöhter Mörtelstabilität auf Basis von Styrol und wenigstens eines (C₁- bis C₈-Alkyl)(meth)acrylsäureesters, dadurch gekennzeichnet, daß zusätzlich 1 bis 20 Gew.-% Aus der EP-A-0 671 435 sind emulgatorfreie, wäßrige Polymerdispersionen auf Basis von Styrol und Alkylacrylsaüreestern zur Verwendung als Bindemittel in Mörtel, bekannt, die ≦ 10 Gew.-% eines Hydroxyalkyl(meth)acrylsäureesters enthalten wenigstens eines Hydroxy(C₁- bis C₈-Alkyl)(meth)acrylsäureesters, bezogen auf die gesamten Monomeren, in Gegenwart eines wasserlöslichen Schutzkolloids und eines radikalischen Initiators oder eines aus einem radikalischen Initiator und einem wasserlöslichen Reduktionsmittel bestehenden Initiatorsystems eingesetzt werden.

Bevorzugt wird die Polymerisation in Monomerzulauffahrweise durchgeführt und das gesamte Schutzkolloid vorgelegt Das Polymerisat weist eine Glasübergangstemperatur von -40 bis +50 °C, vorzugsweise von -20 bis +30 °C auf

Die Zusammensetzung des Copolymers ist durch das oben angegebene Glastemperaturintervall bedingt, unter der Voraussetzung, daß der Gehalt an Hydroxy(C₁- bis C₈-Alkyl)(meth)acrylsäureester im oben angegebenen Intervall liegt.

Beispiele für (C₁- bis C₈-Alkyl)(meth)acrylsäureester sind n-Butylacrylat, n-Butylmethacrylat, n-Octylacrylat, 2-Ethylhexylacrylat. Vorzugsweise wird n-Butylacrylat eingesetzt.

Als Hydroxy(C₁-bis C₈ Alkyl)(meth)acrylsäureester werden erfindungsgemäß Hydroxyethylacrylat, Hydroxyethylmethacrylat, Hydroxypropylacrylat und Hydroxy(2-ethylhexyl)acrylat eingesetzt Bevorzugt ist Hydroxyethylmethacrylat.

Beispiele für wasserlösliche Schutzkolloide sind Polyvinylalkohol, Polyethylenglykol, modifizierte Stärken und Dextrine, Cellulosederivate wie Hydroyethylcellulose, Hydroxypropylcellulose oder Carboxymethylcellulose, Polyvinylpyrrolidon, Polyethylenoxid/Polystyrol- oder Polyethylenoxid/Poly(meth)acrylat-Blockcopolymere, Casein. Bevorzugt werden Polyvinylalkohole mit einem Polymerisationsgrad von 200 bis 2000 und einem Hydrolysegrad von 74 bis 99.5 %, eingesetzt in einer Menge von 1 bis 20 Teilen/100 Teile Monomere.

Die radikalischen Initiatoren sind Peroxide, Hydroperoxide, Wasserstoffperoxid, Natrium-, Kalium-, oder Ammoniumperoxodisulfat, Azoverbindungen, allein oder in Kombination. In einer bevorzugten Ausführungsform der Erfindung wird wasserlösliches Natrium-peroxodisulfat in Kombination mit tert. -Butylhydroperoxid, in einer Gesamtmenge von 0.01 bis 2 Massen-% bezogen auf die gesamten Monomeren, eingesetzt. Als Aktivatoren wirken wasserlösliche Reduktionsmittel, wie Natrium-, Kalium-, Arnmoniumsulfit oder -bisulfit, Natriumformaldehydsulfoxylat oder Ascorbinsäure. Bevorzugt wird der Aktivator, in einer Menge von 0.01 bis 2 Massen-% bezogen auf die gesamten Monomeren, wahrend der Polymerisation dosiert.

Zur Regelung der Dispersionsviskosität kann die Polymerisation in Anwesenheit eines Kettenüberträgers durchgeführt werden. Geeignet sind wasserlösliche, organische Schwefelverbindungen, wie beispielsweise Thioglykolsäure, oder Aminoalkohole, wie beispielsweise Triethanolamin. Bevorzugt wird Triethanolamin verwendet.

Die Polymerisationstemperatur beträgt 30 bis 90 °C, vorzugsweise 50 bis 80 °C.

Das Monomer/Wasser-Verhältnis wird entsprechend eines Feststoffgehalts der fertigen Dispersion von 30 bis 70 %, vorzugsweise von 40 bis 60 % eingestellt.

Nach beendeter Monomerzugabe kann in bekannter Weise durch Nachinitiierung die Polymerisation bis zu einem niedrigen Restmonomergehalt weitergeführt werden, ohne daß dabei die Dispersionsstabilität oder die Mörtelstabilität beeinträchtigt wird.

Die Prüfung auf Mörtelstabilität wurde folgendermaßen durchgeführt.

Nach DIN 18555 wird diese Größe als Ausbreitmaß ermittelt. In einem auf einer Glasplatte angeordneten Setztrichter wird der, ggf. mit Polymer-Dispersion oder -Pulver versehene, frische Mörtel eingegeben und der Setztrichter langsam senkrecht gehoben und entfernt. Der Mörtelkegel wird anschließend durch 15 Hubstöße (1 Hub/s) gerüttelt und dadurch auf der Glasplatte mehr oder weniger ausgebreitet. Der Durchmesser des Ausbreitkuchens, gemessen nach 0, 20, 40 und 60 min, ergibt das Ausbreitmaß des Mörtels. Die DIN-Methode wird als Methode A bezeichnet.

Für Laborzwecke hat sich folgende Methode bewahrt (Methode B). In einen Kunststoffbecher (Bodendurchmesser: 70 mm) wird die Polymer-Dispersion oder das Polymer-Pulver mit der berechneten Anmachwassermenge zusammen vorgelegt und gut vermischt. Dann wird der Trockenmortel zugegeben und mit einem Metallspachtel homogenisiert. Ein Metallflügelrührer (D = 50 mm, H = 10 mm) wird in den Mörtel eingetaucht (Bodenabstand 3 mm) und intermittierend bei 50 Upm gedreht. Die Rührzeit betragt 30 s, die Zeit für Pause 210 s. Wahrend jeder Rührperiode wird das Drehmoment N erfaßt Die maximale Laufzeit einer Messung beträgt 120 min. Die Auftragung von In N gegen Zeit t ergibt eine Gerade, deren Steigung als Labilitätskonstante (k_{lab} = dln N/dt) definiert wird. Je kleiner k_{lab}, desto größer ist die Stabilität des gegebenen Mörtel/Dispersion-Systems.

Gegenstand der vorliegenden Erfindung sind ebenfalls in Wasser redispergierbare Pulver aus den erfindungsgemäßen Dispersionen, wobei die Herstellung so erfolgt, daß die resultierende wäßrige Polymer-Dispersion durch Sprühtrocknugn in Anwesenheit eines Schutzkolloids und eines Antiblockmittels getrocknet wird.

Die erfindungsgemäßen Dispersionen finden Verwendung als Additive in Baustoffen wie z. B. Fliesenklebern, Spachtelmassen, Zementmörteln, Kalkmörteln, Putzen, Trockenmörteln und Gipsbaustoffen sowie in Anstrichfarben und Klebstoffzusammensetzungen.

Bevorzugt werden Polymer-Dispersionen mit einem Gehalt von 20 - 50 Gew.-% Styrol, 40 - 75 Gew.-% (C₁- bis C₈-Alkyl)(meth)acrylsäureester und 2 - 10 Gew.-% eines Hydroxy(C₁- bis C₈-Alkyl(meth)acrylsäureesters hergestellt, wobei die Summe der drei Komponenten 100 Gew.-% beträgt.

Die nachfolgenden Beispiele dienen zur weiteren Erläuterung der Erfindung:

### Beispiel 1

In einem 12-Liter Reaktor mit Blattrührer und Manteltemperierung wurden 2188 g Wasser, 14 g technisches tert.-Butylhydroperoxid (80 %ig), 3.5 g Natriumpersulfat, 1207 g einer 20.3 %igen PVA-Lösung (Hydrolisierungsgrad ca. 87 %), und 3.5 g NaHCO₃ vorgelegt. Die Vorlage wurde auf 60 °C aufgeheizt, dann wurden 1400 g Styrol, 2100 g n-Butylacrylat und 200 g Hydroxyethylmethacrylat innerhalb von 300 min getrennt dosiert. Parallel dazu wurde eine Aktivatorlösung aus 14 g Natriumformaldehydsulfoxylat in 700 g Wasser innerhalb von 360 min zugegeben. Danach wurde der Polymerisationsreaktor weitere 120 min unter Rührung sich selbst uberlassen Anschließend wurde der Reaktor auf Raumtemperatur abgekühlt. Die Mörtelstabilität der Dispersion wurde nach Methode B gemessen. Die Labilitätskonstante beträgt 4·10⁻³ min⁻¹, die Mörtelmasse bleibt nach 120 min immer noch knetbar.

### Beispiel 2 (Vergleichsbeispiel)

Das Beispiel 1 wurde wiederholt, jedoch wurde auf den Einsatz von Hydroxyethylmethacrylat verzichtet. Die Mörtelstabilität der Dispersion nach Methode B zeigt eine hohe Labilitätskonstante von 70·10⁻³ min⁻¹. Die Mörtelmasse wurde nach 20 min fest.

### Beispiel 3

Das Beispiel 1 wurde wiederholt, jedoch wurde die Monomerdosierzeit auf 480 min, und die Aktivatordosierzeit auf 540 min verlängert (Nachinitiierung). Die Labilitätskonstante (Methode B) beträgt 3.9·10⁻³ min⁻¹.

### Beispiel 4 (Vergleichsbeispiel)

Im Polymerisationsreaktor wurden 2441 g Wasser, 14 g 80 %iges tert.-Butylhydroperoxid, 3.5 g Natriumpersulfat, 140 g Hydroxyethylmethacrylat, 884 g einer 19.8 %igen PVA-Lösung, 3.5 g Dinatriumsalz der Ethylendiamintetraessigsäure, 7 g Triethanolamin, und 3.5 g NaHCO₃ vorgelegt. Die Vorlage wurde auf 70 °C aufgeheizt, danach wurden 1400 g Styrol und 2100 g n-Butylacrylat innerhalb von 300 min getrennt dosiert. Parallel dazu wurde innerhalb von 360 min eine Lösung aus 14 g Natriumformaldehydsulfoxylat in 700 g Wasser innerhalb von 360 min zugegeben. Nach einer Nachpolymerisationszeit von 120 min wurde der Reaktor auf 20 °C abgekühlt. Die Dispersion wies eine Brookfield-Viskosität von 11000 mPa·s auf, die Labilitätskonstante (Methode B) beträgt 55·10⁻³ min⁻¹.

### Beispiel 5

Die aus Beispiel 1 entstandene Dispersion (Brookfield-Viskositat 1100 mPa·s) wurde mit 15 Teilen PVA (als 20 %ige Losung)/ 100 Tle Dispersionsfeststoff versetzt und der

Feststoffgehalt auf 35 % eingestellt. Der Latex wurde in einer Sprühtrocknungsapparatur in Luftgleichstrom (Eingangstemperatur 112 °C, Ausgangstemperatur 72 °C) getrocknet. Als Antiblockmittel wurden 10 % (bezogen auf Feststoffgehalt) eines Talkum-Dolomit-Gemisches (1:1) eingesetzt. Das Pulver war weiß, fließfähig, sehr gut redispergierbar und zerfiel in Wasser ohne weitere Behandlung in seine Primärteilchen.

Das Polymer-Pulver wurde im Mörtel (Quarzsand 0.5-1.2 mm 1260 Tle, Quarzsand H 32 840 Tle, Zement PZ 35 F 900 Tle) bei einem Pulver/Zement-Verhältnis von 0.1 und einem Wasser/Zement-Verhältnis von 0.46 auf Verarbeitbarkeit nach Methode A geprüft. Die Abhängigkeit des Ausbreitmaßes von der Zeit ist:

| Zeit (min) | Ausbreitmaß (mm) |
|---|---|
| 0 | 190 |
| 20 | 170 |
| 40 | 160 |
| 60 | 150 |

Die Mörtelfestigkeit wurde nach 7 Tagen Wasserlagerung bei Raumtemperatur und 21 Tagen Trockenlagerung gemessen. Die Biegezugfestigkeit betrug 13.5 N/mm², die Druckfestigkeit 50 8 N/mm².

## Patentansprüche

1. Verfahren zur Herstellung von sterisch stabilisierten, emulgatorfreien, wässrigen Polymer-Dispersionen mit erhöhter Mörtelstabilität auf Basis von Styrol und wenigstens eines (C ₁- bis C₈-Alkyl)(meth)acrylsäureesters,
**dadurch gekennzeichnet,**
**dass** zusätzlich 1 bis 20 Gew.-% wenigstens eines Hydroxy(C₁- bis C₈-Alkyl) (meth)acrylsäureesters, ausgewählt aus Hydroxyethylacrylat, Hydroxyethylmethacrylat, Hydroxypropylacrylat, Hydroxy(2-ethylhexyl)acrylat, bezogen auf die gesamten Monomeren,
in Gegenwart eines wasserlöslichen Schutzkolloids und eines radikalischen Initiators oder eines aus einem radikalischen Initiator und einem wasserlöslichen Reduktionsmittel bestehenden Initiatorsystems eingesetzt werden.

2. Verfahren gemäß Anspruch 1,
**dadurch gekennzeichnet,**
**dass** das dispergierte Polymerisat eine Glasübergangstemperatur von - 40 bis + 50 °C, vorzugsweise von -20 bis +30 °C aufweist.

3. Verfahren gemäß Anspruch 1 oder 2,
**dadurch gekennzeichnet,**
**dass** die Polymerisation in Monomerzulauffahrweise durchgeführt wird.

4. Verfahren gemäß Anspruch 1 bis 3,
**dadurch gekennzeichnet,**
**dass** die gesamte Schutzkolloidmenge in die Vorlage gegeben wird.

5. Verfahren gemäß den Ansprüchen 1 bis 4,
**dadurch gekennzeichnet,**
**dass** die Hydroxy(C₁- bis C₈-Alkyl)(meth)acrylsäureester bevorzugt in Mengen von 2 bis 10 Gew.-% eingesetzt werden.

6. Verfahren gemäß den Ansprüchen 1 bis 5,
**dadurch gekennzeichnet,**
**dass** die Polymerisation in Gegenwart eines wasserlöslichen Viskositätsreglers durchgeführt wird.

7. Verfahren gemäß Anspruch 6,
**dadurch gekennzeichnet,**
**dass** als Viskositätsregler eine niedermolekulare, organische Schwefelverbindung oder eine niedermolekulare, nicht oberflächenaktive Aminoalkoholverbindung eingesetzt wird.

8. In Wasser redispergierbare Pulver aus Dispersionen hergestellt nach einem Verfahren gemäß den Ansprüchen 1 bis 7.

9. Verfahren zur Herstellung von in Wasser redispergierbaren Pulvern durch Verwendung von Dispersionen nach Anspruch 8,
**dadurch gekennzeichnet,**
**dass** die resultierende wässrige Polymer-Dispersion durch Sprühtrocknung in Anwesenheit eines Schutzkolloids und eines Antiblockmittels getrocknet wird.

10. Verwendung der sterisch stabilisierten, emulgatorfreien, wässrigen Polymer-Dispersionen hergestellt nach einem Verfahren gemäß den Ansprüch 1 bis 7 als Additiv in Baustoffen.

11. Verwendung der Polymer-Dispersionen gemäß Anspruch 10 als Additiv in Fliesenklebern, Spachtelmassen, Zementmörteln, Kalkmörteln, Putzen, Trockenmörteln und Gipsbaustoffen.

12. Verwendung der sterisch stabilisierten, emulgatorfreien, wässrigen Polymer-Dispersionen gemäß Anspruch 10 als Additiv in Anstrichfarben, Kunstharzputzen und Klebstoffzusammensetzungen.

13. Verwendung der Pulver nach Anspruch 8 in Fliesenklebern, Spachtelmassen, Zementmörteln, Kalkmörteln, Putzen, Trockenmörteln, Gipsbaustoffen, Anstrichfarben, Kunstharzputzen und Klebstoffzusammensetzungen.

## Claims

1. Process for the preparation of sterically stabilized, emulgator-free, aqueous polymer dispersions with increased mortar stability on the basis of styrene and at least one (C₁₋₈ alkyl)(meth)acrylicacid ester, **characterized in that** additionally 1 to 20 weight percent of at least one hydroxy(C₁₋₈ alkyl)(meth)acrylic-acid ester selected from hydroxy ethyl acrylate, hydroxy ethyl methacrylate, hydroxy propyl acrylate, hydroxy(2-ethyl hexyl)acrylate, based on the total amount of monomers, is used in the presence of a water-soluble protective colloid and a free-radical initiator or an initiator system consisting of a free-radical initiator and a water-soluble reducing agent.

2. Process according to claim 1, **characterized in that** the dispersed polymer has a glass transition temperature of from -40°C to +50°C, preferably of from -20°C to +30°C.

3. Process according to claim 1 or 2, **characterized in that** the polymerization is carried out by monomer feed operation.

4. Process according to claims 1 to 3, **characterized in that** the total amount of protective colloid is added in the recipient vessel.

5. Process according to claims 1 to 4, **characterized in that** the (C₁₋₈ alkyl)(meth)acrylic-acid ester is preferably used in amounts of from 2 to 10 weight percent.

6. Process according to claims 1 to 5, **characterized in that** the polymerization is carried out in the presence of a water-soluble viscosity regulator.

7. Process according to claim 6, **characterized in that** a lowmolecular organic sulfur compound or a low-molecular non-surfactant amino alcohol compound is used as viscosity regulator.

8. Powders that are re-dispersible in water and prepared from dispersions by a process according to claims 1 to 7.

9. Process for the preparation of powders that are re-dispersible in water by using dispersions according to claim 8, **characterized in that** the resulting aqueous polymer dispersion is dried by spray drying in the presence of a protective colloid and an antiblocking agent.

10. Use of the sterically stabilized, emulgator-free, aqueous polymer dispersions prepared by a process according to claims 1 to 7, as an additive in building materials.

11. Use of the polymer dispersions according to claim 10 as an additive in adhesives for tiles, knife fillers, cement mortars, lime mortars, plasters, dry mortars and gypsum building materials.

12. Use of the sterically stabilized, emulgator-free, aqueous polymer dispersions according to claim 10, as an additive in paints, synthetic resin plasters and adhesive compositions.

13. Use of the powders according to claim 8 in adhesives for tiles, knife fillers, cement mortars, lime mortars, plasters, dry mortars, gypsum building materials, paints, synthetic resin plasters and adhesive compositions.

## Revendications

1. Pocédé de production de dispersions aqueuses de polymère sans émulsifiant, stériquement stabilisées, ayant une stabilité accrue dans le mortier, à base de styrène et au moins d'un ester d'acide (alkyle en C₁ à C₈)(méth)acrylique,
**caractérisé en ce qu'**
on utilise en outre de 1 à 20 % en poids d'au moins un ester d'acide hydroxy(alkyle en C₁ à C₈)(méth)acrylique, choisi parmi l'acrylate d'hydroxyéthyle, le méthacrylate d'hydroxyéthyle, l'acrylate d'hydroxypropyle, l'acrylate d'hydroxy(2-éthylhexyle), par rapport à l'ensemble des monomères,
en présence d'un colloïde protecteur soluble dans l'eau et d'un initiateur radicalaire ou d'un système initiateur constitué d'un initiateur radicalaire et d'un réducteur soluble dans l'eau.

2. Procédé selon la revendication 1,
**caractérisé en ce que**
le produit de polymérisation dispersé présente une température de transition vitreuse allant de -40 à + 50°C, de préférence de -20 à +30°C.

3. Procédé selon la revendication 1 ou 2,
**caractérisé en ce qu'**
on conduit la polymérisation de manière à ajouter le monomère.

4. Procédé selon les revendications 1 à 3,
**caractérisé en ce qu'**
on introduit la totalité du colloïde protecteur dans le récipient.

5. Procédé selon les revendications 1 à 4,
**caractérisé en ce qu'**
on utilise les esters d'acide hydroxy(alkyle en C₁ à C₈)(méth)acrylique de préférence à des quantités de 2 à 10 % en poids.

6. Procédé selon les revendications 1 à 5,
**caractérisé en ce qu'**
on conduit la polymérisation en présence d'un régulateur de viscosité soluble dans l'eau.

7. Procédé selon la revendication 6,
**caractérisé en ce qu'**
on utilise comme régulateur de viscosité un composé de soufre organique à faible poids moléculaire ou un composé d'aminoalcool non tensioactif de faible poids moléculaire.

8. Poudre redispersable dans l'eau à partir de dispersions, produite selon un procédé de l'une des revendications 1 à 7.

9. Procédé de production de poudres redispersables dans l'eau par utilisation de dispersions selon la revendication 8,
**caractérisé en ce qu'**
on sèche la dispersion aqueuse de polymère résultante au moyen d'un séchage par pulvérisation en présence d'un colloïde protecteur et d'un agent anti-bloquant.

10. Utilisation des dispersions aqueuses de polymère sans émulsifiant, stériquement stabilisées, produites selon un procédé d'une des revendications 1 à 7 comme additif dans les matériaux de construction.

11. Utilisation des dispersions de polymère selon la revendication 10 comme additifs dans les colles pour carreaux de céramique, les mastics, les mortiers de ciment, les mortiers de chaux, les enduits, les mortiers secs et les matériaux de plâtre.

12. Utilisation de la dispersion aqueuse de polymère sans émulsifiant, stériquement stabilisée, selon la revendication 10 comme additif dans les peintures, les enduits de résine synthétique et les compositions d'adhésifs.

13. Utilisation de la poudre selon la revendication 8 dans les colles pour carreaux de céramique, les mastics, les mortiers de ciment, les mortiers de chaux, les enduits, les mortiers secs, les matériaux de plâtre, les peintures, les enduits de résine synthétique et les compositions d'adhésifs.
